# EUROPÄISCHE PATENTSCHRIFT

(11) **EP 3 413 091 B1**
(45) Veröffentlichungstag und Bekanntmachung des Hinweises auf die Patenterteilung: **10.01.2024**
(21) Anmeldenummer: 17175374.2
(22) Anmeldetag: 09.06.2017
(51) Int. Cl.: G01T 1/20, G01T 1/17

(54) **MESSSYSTEM ZUM BESTIMMEN EINER MESSGRÖSSE MITTELS EINES PHOTODETEKTORS**
MEASURING SYSTEM FOR DETERMINING A MEASURED QUANTITY BY MEANS OF A PHOTODETECTOR
SYSTÈME DE MESURE DE DÉTERMINATION D'UNE GRANDEUR DE MESURE À L'AIDE D'UN PHOTODÉTECTEUR

(43) Veröffentlichungstag der Anmeldung: 12.12.2018
(73) Patentinhaber: Berthold Technologies GmbH & Co. KG, 75323 Bad Wildbad (DE)
(72) Erfinder: Berthold, Fritz, 75173 Pforzheim (DE); Freiburger, Ewald, 75245 Neulingen (DE); Reuter, Wilfried, 75334 Straubenhardt (DE)
(74) Vertreter: Patentanwälte Ruff, Wilhelm, Beier, Dauster & Partner mbB

(56) Entgegenhaltungen:
- EP-A2- 1 074 856
- EP-A2- 1 569 012
- WO-A1-2010/125062
- DE-A1- 19 702 914

## Beschreibung

Die Erfindung betrifft ein Messsystem zum Bestimmen einer Messgröße mittels eines Photodetektors.

Die EP 1 569 012 A2 offenbart ein Verfahren zum Nachweis ionisierender Strahlung mit Hilfe eines Szintillators und eines Photovervielfachers, wobei ein Feststoffszintillator verwendet wird, der mindestens eine Abklingzeitkomponente von über 100 ns aufweist. Die vom Szintillator emittierten Photonen werden mit einem schnellen Einzelphotonenzähler gemessen.

Die DE 197 02 914 A1 zeigt ein Verfahren und eine Anordnung zum Bestimmen vorgegebener Eigenschaften von Zielpartikeln eines Probenmediums, bei dem ein zeitlicher Abstand zwischen aufeinander folgenden elektrischen Impulsen, die durch auf einen Fotodetektor auftreffende Photonen bewirkt werden, zum Bestimmen einer Messgröße ausgewertet werden.

Der Erfindung liegt die Aufgabe zugrunde, ein Messsystem zum Bestimmen einer Messgröße mittels eines Photodetektors zur Verfügung zu stellen, das eine hohe Empfindlichkeit und einen großen Dynamikbereich aufweist.

Die Erfindung löst diese Aufgabe durch ein Messsystem nach Anspruch 1.

Das Messsystem weist einen Photodetektor auf, der dazu ausgebildet ist, einzelne Photonen, die auf den Photodetektor treffen, in zugehörige einzelne und voneinander getrennte elektrische Impulse umzuwandeln, insbesondere in normierte elektrische Impulse mit identischer Amplitude und identischer Dauer umzuwandeln.

Das Messsystem weist weiter eine Auswerteeinheit auf, die dazu ausgebildet ist, einen zeitlichen Abstand bzw. eine Zeitdauer zwischen jeweils aufeinanderfolgenden elektrischen Impulsen zum Bestimmen einer Messgröße auszuwerten. Die Messgröße kann beispielsweise im einfachsten Fall eine Zählrate von Ereignissen sein. Ein Ereignis kann beispielsweise sein, dass ein ionisierendes Teilchen, beispielsweise ein Beta-Teilchen, auf den Szintillator trifft. Die Messgröße kann weiter beispielsweise eine Aktivität, und/oder eine Aktivität pro Fläche, und/oder eine Kontamination, und/oder eine Aktivitätskonzentration, und/oder eine Ortsdosisleistung sein.

Das Messsystem weist einen Szintillator auf, der dazu ausgebildet ist, ionisierende Strahlung, die auf den Szintillator trifft, in eine zeitliche Folge von Photonen umzuwandeln und abzustrahlen, wobei der Szintillator optisch mit dem Photodetektor gekoppelt ist. Die mittels des Szintillators umgewandelten Photonen werden zumindest teilweise mittels des Photodetektors in die zugehörigen einzelnen elektrischen Impulse umgewandelt. Der Szintillator kann beispielsweise ZnS-Szintillator, ein ZnS(Ag)-Szintillator, ein CaWolframat-Szintillator, ein CdWolframat-Szintillator, oder ein Gadolinium-oxysulfid-Szintillator sein.

Eine Kristallstruktur von CaWolframat kann wie folgt dargestellt werden:

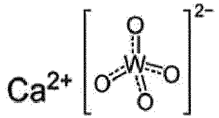

Der Szintillator kann beispielsweise als so genanntes (Hand- oder Fuß-)Panel eines Kontaminationsmonitors ausgebildet sein. Der Szintillator kann beispielsweise eine Fläche von 100 cm² aufweisen. Der Szintillator kann optisch mit einem optischen Konzentrator gekoppelt sein, der das von dem Szintillator erzeugte Licht auf eine kleinere, dem Photodetektor angepasste Fläche bündelt, wobei der Konzentrator das gebündelte Licht an den Photodetektor ausgibt.

Die Auswerteeinheit ist dazu ausgebildet, für Impulse, die innerhalb eines vorgebbaren, insbesondere gleitenden, Zeitintervalls bzw. Zeitfensters liegen, die jeweiligen zeitlichen Abstände bzw. Zeitdauern zwischen aufeinanderfolgenden elektrischen Impulsen zu ermitteln, und basierend auf dem ermittelten Verlauf der zeitlichen Abstände bzw. Zeitdauern die Messgröße zu bestimmen. Beispielsweise wird ein erster zeitlicher Abstand zwischen einem zeitlich ältesten Impuls innerhalb des Zeitintervalls und einem zeitlich zweitältesten Impuls innerhalb des Zeitintervalls bestimmt. Dann wird ein zweiter zeitlicher Abstand zwischen dem zeitlich zweitältesten Impuls innerhalb des Zeitintervalls und einem zeitlich drittältesten Impuls innerhalb des Zeitintervalls bestimmt, usw., wobei diese Schritte bis zum jüngsten oder aktuellen Impuls wiederholt werden, der gerade noch innerhalb des Zeitintervalls liegt bzw. dieses zeitlich begrenzt. Die Zeitdauern bzw. deren charakteristischer Verlauf werden/wird dann zum Bestimmen der Messgröße ausgewertet. Das Zeitintervall kann beispielsweise eine Dauer in einem Bereich zwischen 10 µs und 30 µs aufweisen.

Die Auswerteeinheit ist dazu ausgebildet, den Verlauf der ermittelten zeitlichen Abstände, der auch als Verlaufsmuster bezeichnet werden kann, mit einem gespeicherten Referenzverlauf zeitlicher Abstände zu vergleichen, wobei der gespeicherte Referenzverlauf charakteristisch für einen Typ von ionisierender Strahlung ist, die auf den Szintillator trifft. Der gespeicherte Referenzverlauf kann beispielsweise charakteristisch für Betastrahlung sein.

Die Länge des Zeitintervalls und/oder der Referenzverlauf kann/können weiter von einem Typ des verwendeten Szintillators bzw. von dessen spezifischer Abklingzeit abhängen.

In einer Ausführungsform weist das Messsystem einen Zeitgeber auf, beispielsweise eine Echtzeituhr und/oder einen getakteten Zähler, und einen FIFO- bzw. Ring-Speicher auf, in den bei jedem Auftreten eines elektrischen Impulses ein mittels des Zeitgebers erzeugter Zeitstempel gespeichert wird. Die zeitlichen Abstände zwischen den Impulsen können dann durch Differenzbildung der entsprechenden FIFO-Speicherinhalte ermittelt werden.

In einer Ausführungsform weist das Messsystem einen Referenzverlaufsspeicher auf, der dazu ausgebildet ist, den Referenzverlauf zu speichern.

In einer Ausführungsform sind die Auswerteeinheit, und/oder der FIFO-Speicher, und/oder der Zeitgeber, und/oder der Referenzverlaufsspeicher Bestandteile eines FPGA (Field Programmable Gate Array). Ein Teil der genannten Komponenten kann beispielsweise auch mittels eines digitalen Signalprozessors verwirklicht sein.

In einer Ausführungsform weist der Szintillator eine Abklingzeit auf, die größer als 100 ns ist.

In einer Ausführungsform sind die elektrischen Impulse normierte Impulse mit einer jeweils identischen Impulsspannung, beispielsweise 3,3 V oder 5 V, und einer jeweils identischen Impulsdauer, beispielsweise 10 ns.

In einer Ausführungsform ist der Photodetektor ein Photomultiplier, der als Singlephotoncounter, genauer Singlephotoelectroncounter, betrieben wird. Hinsichtlich der Grundlagen von Singlephotoncountern sei auch auf die einschlägige Fachliteratur verwiesen. Alternativ kann als Photodetektor auch ein Photoncounter auf Halbleiterbasis verwendet werden, beispielsweise ein Silicon Photomultiplier (SiPM).

In einer Ausführungsform ist das Messsystem ein Kontaminationsmessgerät für Alpha-Strahlung, und/oder Beta-Strahlung und/oder Gamma-Strahlung zur Bestimmung einer Aktivität, und/oder einer Kontamination, und/oder einer Aktivitätskonzentration, und/oder einer Ortsdosisleistung. Hinsichtlich der grundsätzlichen Eigenschaften derartiger Messsysteme sei auch auf die einschlägige Fachliteratur verwiesen.

Die zeitlichen Abstände und/oder deren zeitlicher Verlauf können/kann beispielsweise mittels Mustererkennung (Pattern Recognition) zur Identifikation und Klassifizierung von validen Ereignissen bei Radioaktivitätsmessungen mit Szintillatoren ausgewertet werden. Ein Ereignis kann beispielsweise sein, dass ein ionisierendes Teilchen, beispielsweise ein Beta-Teilchen, auf den Szintillator trifft.

Mittels des erfindungsgemäßen Messsystems können beispielsweise Beta-Teilchen detektiert werden, die durch Photo(electron)-Counting registriert werden. Dabei können beispielsweise unter Verwendung intelligenter Pattern-Recognition-Verfahren mehr valide Ereignisse im selben Zeitintervall unterschieden werden, als durch herkömmliche Messsysteme.

Bei der Messung extrem niedriger Lichtintensitäten manifestiert sich die Quantennatur des Lichtes dergestalt, dass es in Form von diskreten Lichtquanten, d.h. Photonen, auftritt. Die empfindlichsten Messverfahren können einzelne Photonen digital messen. Dazu dient insbesondere der Photomultiplier. An dessen Photokathode werden durch den äußeren photoelektrischen Effekt einzelne Photoelektronen erzeugt. Deren Ladung, die Elementarladung, ist so gering, dass ein direkter elektronischer Nachweis wegen des zu geringen Rauschabstandes nicht möglich ist. Deshalb erfolgt zunächst eine Verstärkung der Ladung durch mehrfache Sekundärelektronenvervielfachung in einer so genannten Dynoden-Kette. Im Anschluss erfolgt typisch eine elektronische Verstärkung.

Die empfindlichste Betriebsart des Photomultipliers ist der Photoncounter, genauer Photoelektroncounter, da nur diejenigen Photonen, welche auch ein Photoelektron erzeugen, nachgewiesen werden können.

Erfindungsgemäß werden alle mittels des Photodetektors erzeugten elektrischen Signale, die eine bestimmte Schwelle überschreiten, in einen (Norm-) Impuls umgewandelt. Die Schwelle ist derart gewählt, dass die aufgrund einzelner Photoelektronen erzeugten elektrischen Signale über der Schwelle liegen und somit registriert werden bzw. einen (Norm-) Impuls zur Folge haben. Wie weit über der Schwelle die Höhe der elektrischen Signale liegt, ist unerheblich, es wird lediglich ein immer gleicher (Norm-) Impuls erzeugt.

Die derart erzeugten Impulse sind bei herkömmlichen Messsystemen jedoch nicht von solchen Signalen bzw. Impulsen zu unterscheiden, die beispielsweise durch Elektronen verursacht werden, die durch thermische Emission aus der Photokathode austreten und somit eine Rate von Hintergrund- oder Störimpulsen erzeugen.

Erfindungsgemäß kann zur optimalen Unterscheidung von Nutz- und Störsignalen, also zum Erreichen höchster Nachweisempfindlichkeit, eine Mustererkennung verwendet werden. Dazu werden die gemessenen Daten in der Weise analysiert, dass Nutz-und Störsignale identifiziert und voneinander unterschieden werden können. Zu diesem Zweck können zunächst Muster (Pattern) erarbeitet werden, welche jeweils für Nutz- oder Störsignale spezifisch sind und mit denen die gemessenen Daten bzw. Zeitdauern oder deren zeitliche Verläufe verglichen werden.

Im Messgerät kann beispielsweise ein Zeitraster vorgegeben werden, d.h. eine Taktzeit bzw. Abtastzeit. Die Taktzeit kann beispielsweise 10 ns betragen. In diesem Zeitraster tastet die Auswerteeinheit ab, ob momentan ein Impuls ansteht oder nicht.

In einen FIFO-Speicher, der beispielsweise als Ringspeicher organisiert sein kann, wird dann ein binärer Wert, Null bzw. Eins, eingetragen, der angibt, ob ein Impuls vorhanden war bzw. nicht. Eine Position im FIFO-Speicher korrespondiert hierbei mit dem Abtastzeitpunkt. Der FIFO-Speicher kann beispielsweise eine Speichertiefe von 20 µs aufweisen. Bei einer Abtastzeit von 10 ns wären dies 2000 binäre Speicherzellen.

Im FIFO-Speicher bildet sich eine Folge von binären Werten im Abtasttakt (Bitfolge), wobei beispielsweise eine binäre Eins einem Elektron entspricht, das von der Photokathode emittiert wurde, sei es von einem Photon als Photoelektron ausgelöst oder thermisch als Background.

Im Abtasttakt kann nun ein valides Ereignis innerhalb eines gleitenden Zeitfensters mit beispielsweise einer Zeitdauer von 20 µs gesucht werden. Ein valides Ereignis kann durch eine Bitfolge charakterisiert sein, welche einer erwarteten Bitfolge d.h. Impulsraten-Verteilung entspricht.

Im einfachsten Fall kann überprüft werden, ob innerhalb des FIFO-Speichers an beliebiger Stelle ein Teilfenster von 16 µs liegt, in dem beispielsweise mindestens acht Speicherzellen jeweils einen Impuls anzeigen. Als ein weiteres Kriterium könnte dann das Verhältnis der Zahl der Zellen, die jeweils einen Impuls anzeigen, in der ersten und zweiten Hälfte des Teilfensters bestimmt werden, um falsch positive Ereignisse (Spikes o.ä.) auszuschließen. Ein Ereignis, bei dem beispielsweise alle 8 Speicherzellen, die einen Impuls anzeigen, nur im ersten oder nur im zweiten Teilfenster liegen, kann nicht valide sein und dürfte durch Störsignale zustande gekommen sein und wird daher verworfen.

Zusätzlich oder alternativ kann eine zeitliche Verteilung bzw. Verdichtung zwischen Impulsen ausgewertet werden, wenn sie über statistische Schwankungen hinausgeht, um auf ein valides Ereignis zu schließen.

Weiter kann eine ideale oder erwartete Impulsfolge bzw. Bitfolge (beispielsweise 100010010101001 ...) vorgegeben werden, d.h. ein Referenzverlauf zeitlicher Abstände der Impulse, die bzw. der einem Ereignis idealtypisch entspricht. Dann kann innerhalb des gleitenden Zeitfensters gesucht werden, ob sich im FIFO-Speicher eine Bitfolge findet, die der erwarteten Bitfolge innerhalb eines Toleranzbandes gleicht. Findet sich eine solche Bitfolge, kann auf ein valides Ereignis geschlossen werden. Entsprechend kann auch eine für Störungen typische Bitfolge vorgegeben werden, um Störungen möglichst zu unterdrücken.

Die Auswertung der zeitlichen Abstände zwischen den Impulsen erlaubt es auch festzustellen, ob während des Abklingens eines ersten Ereignisses, beispielsweise in Form des Auftreffens eines Alpha-Teilchens auf den Szintillator, schon ein zweites Ereignis beginnt, wodurch der dynamische Bereich nach oben erweitert wird.

Alternativ zum Beschreiben der Speicherzellen des FIFO-Speichers mit einem konstanten Abtasttakt kann eine Speicherzelle des FIFO-Speichers nur bei jedem Auftreten eines elektrischen Impulses mit einem Zeitstempel beschrieben werden, der mit dem Zeitpunkt des Auftretens des Impulses korrespondiert. Der Zeitstempel kann mittels eines Zeitgebers erzeugt werden. Der Zeitgeber kann im einfachsten Fall ein freilaufender, geeignet getakteter Zähler sein. Die Speicherzellen weisen für diesen Fall eine geeignete Wortbreite auf, beispielsweise 16 oder 32 Bit. Der zeitliche Abstand zwischen aufeinanderfolgenden elektrischen Impulsen kann dann durch Differenzbildung ermittelt werden.

Das erfindungsgemäße Messsystem kann beispielsweise ein Kontaminationsmessgerät bilden, beispielsweise einen tragbaren Kontaminationsmonitor oder einen stationären Hand- und Fuß-Monitor mit ZnS-Szintillator und Photoncounter. Erfindungsgemäß können mehr valide Ereignisse vom Untergrund unterschieden und registriert werden. Falsch positive Signale könnten identifiziert und ausgeschlossen werden, das System kann höhere Ereignisraten verarbeiten, so dass der dynamische Bereich nach oben und unten erweitert wird.

Die Erweiterung des dynamischen Bereichs nach oben kommt im Falle von Kontaminationsmessung mit ZnS-Szintillatoren auch wie folgt zustande. Nach einem von Alpha-Strahlung ausgelösten Ereignis leuchtet der Szintillator noch für eine gewisse Zeit nach und erzeugt eine überhöhte Rate von Photo(elektron)-Counts, welche die Messung eines Beta-Ereignisses unmöglich machen würden. Durch die Auswertung der Zeitdauern zwischen den Impulsen kann identifizieren werden, wann eine störungsfreie Beta-Messung wieder möglich ist oder ob noch während des Abklingens der Phosphoreszenz ein Beta-Ereignis identifiziert werden kann.

Mittels des erfindungsgemäßen Messgeräts kann auch Alpha-Strahlung selbst gemessen werden. Zwar wird der Photoncounter durch ein Alpha-Teilchen übersteuert, was jedoch durch das Auswerten der zeitlichen Abstände der Impulse erkannt werden kann. Auch die Dauer der Übersteuerung und die Abklingphase können detektiert werden.

Als Folge der höheren Empfindlichkeit wird auch die Homogenität der Orts-Empfindlichkeit verbessert, wenn mehr kleinere Ereignisse, die von Randzonen eines flächigen Szintillators kommen, noch vom Untergrund unterschieden werden können.

Das erfindungsgemäße Messsystem verwirklicht ein effizientes Störfilter, um etwa bei statistisch auftretenden Signalen wie bei Radioaktivitätsmessungen statistisch nicht zu rechtfertigende Signalfolgen zu identifizieren, um sie von der Weiterverarbeitung ausschließen oder dafür Korrekturen vornehmen zu können.

Die Erfindung wird nachfolgend unter Bezugnahme auf die Zeichnungen detailliert beschrieben. Hierbei zeigen:
- Fig. 1: ein Messsystem in Form eines Kontaminationsmessgeräts gemäß einer ersten Ausführungsform,
- Fig. 2: ein Messsystem in Form eines Kontaminationsmessgeräts gemäß einer weiteren Ausführungsform,
- Fig. 3: ein nicht zur Erfindung gehörendes Messsystem zur Messung von Chemo- und Biolumineszenz sowie Fluoreszenz und
- Fig. 4: einen exemplarischen zeitlichen Verlauf von elektrischen Impulsen, die mittels eines Photodetektors in Form eines Singlephotoncounters des in Fig. 1 dargestellten Messsystems beim Auftreffen eines Beta-Teilchens auf einen Szintillator erzeugt werden.

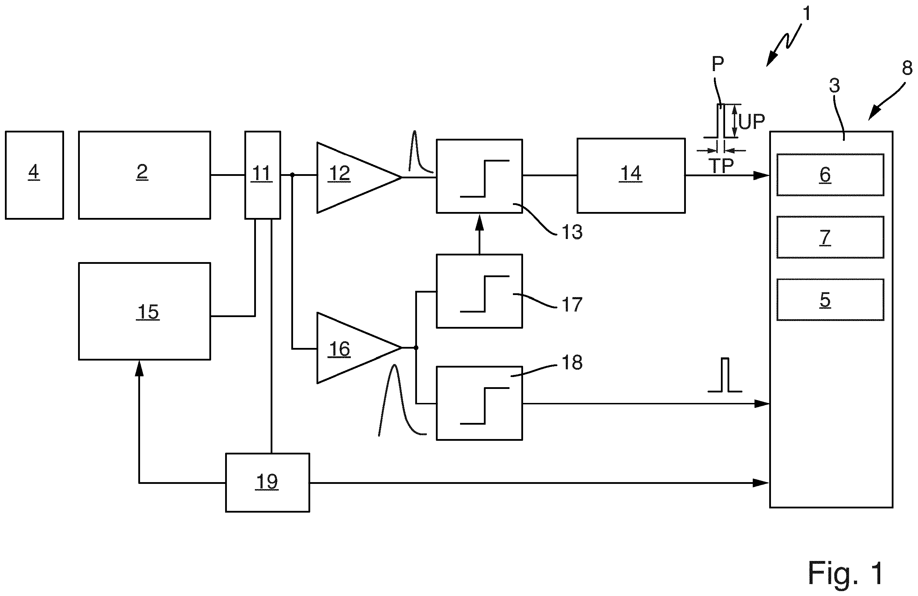

Fig. 1 zeigt ein erfindungsgemäßes Messsystem 1 in Form eines Kontaminationsmessgeräts gemäß einer ersten Ausführungsform.

Das Messsystem 1 weist einen ZnS-Szintillator 4 mit einer Abklingzeit größer als 100 ns auf, der dazu ausgebildet ist, ionisierende Strahlung, die auf den Szintillator 4 trifft, in eine zeitliche Folge von Photonen umzuwandeln.

Das Messsystem 1 weist einen Photodetektor 2 in Form eines Photomultipliers auf, der als Singlephotoncounter betrieben wird. Der Szintillator 4 ist optisch mit dem Photodetektor 2 gekoppelt. Mittels des Photodetektors 2 in Verbindung mit einem Spannungsteiler 11, einem schnellen Analogverstärker 12, einem Diskriminator 13 und einem Pulsformer 14 werden Photonen, die vom Szintillator 4 auf den Photodetektor 2 treffen, in zugehörige einzelne elektrische Impulse P umgewandelt.

Die elektrischen Impulse P werden als normierte Impulse mit einer jeweils identischen Impulsspannung UP und einer jeweils identischen Impulsdauer TP erzeugt.

Das Messsystem 1 weist weiter eine Auswerteeinheit 3 in Form eines FPGA 8 auf, die bzw. der dazu ausgebildet ist, einen zeitlichen Abstand zwischen aufeinanderfolgenden elektrischen Impulsen P zum Bestimmen einer Messgröße auszuwerten. Die Messgröße kann beispielsweise eine Aktivität, und/oder eine Kontamination, und/oder eine Aktivitätskonzentration, und/oder einer Ortsdosisleistung sein.

Das Messsystem 1 weist weiter eine herkömmliche Hochspannungsversorgung 15 für den Photomultiplier 2 auf.

Die Komponenten 12, 13 und 14 sind Bestandteil eines so genannten Beta-Kanals, der zur Messung von Beta-Aktivität dient.

Ein langsamer Analogverstärker 16 und ein Diskriminator 18 sind Teil eins Alpha-Kanals, der zur Messung von Alpha-Aktivität dient.

Weiter ist ein Überstromdetektor 19 vorgesehen, der bei zu hohen Anodenströmen im Photomultiplier 2 bewirkt, dass die Hochspannungsversorgung 15 die erzeugte Spannung geeignet reduziert.

Ein Diskriminator 17 und der Diskriminator 13 wirken derart zusammen, dass beim Auftreten eines durch ein Alpha-Teilchen bewirkten Pulses der Beta-Kanal für eine vorgegebene Zeitdauer geschlossen wird.

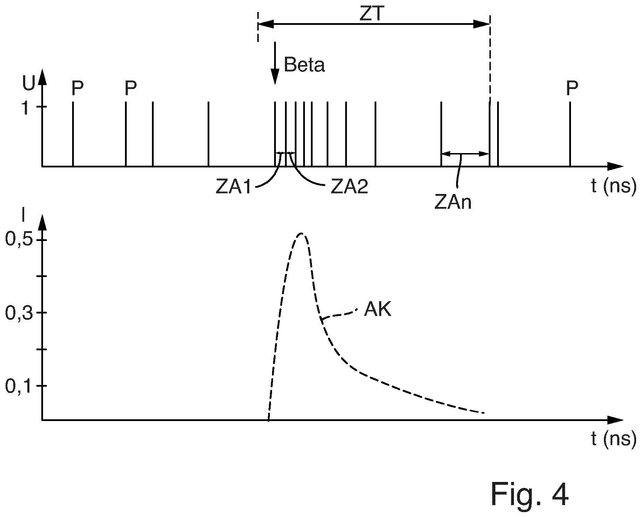

Fig. 4 zeigt im oberen Diagramm einen exemplarischen zeitlichen Verlauf der Impulse P für den Fall, dass ein Beta-Teilchen auf den Szintillator 4 trifft, wobei der Zeitpunkt des auftreffenden Beta-Teilchens mit einem Pfeil markiert ist. Die Impulse P sind aus Gründen der einfacheren Darstellung jeweils als Linie dargestellt.

Weiter ist im unteren Diagramm eine Abklingkurve AK dargestellt, die charakteristisch für den verwendeten Szintillator 4 ist. Auf der X-Achse ist die Zeit t aufgetragen und auf der Y-Achse des oberen Diagramms ist die Spannung U (für die Impulse P) und im unteren Diagramm die Intensität I (für die Abklingkurve AK) aufgetragen.

Die Impulse P vor dem Auftreffen des Beta-Teilchens auf den Szintillator 4 und nach dem Abklingen des Szintillators 4 sind durch Multiplierrauschen verursacht.

In Fig. 4 sind zeitliche Abstände ZA1 bis ZAn zwischen den Impulsen P dargestellt, die durch das auftreffende Beta-Teilchen bewirkt sind. Der Verlauf der zeitlichen Abstände ZA1 bis ZAn ist charakteristisch für Betastrahlung und charakteristisch für das Material des Szintillators 4. Ein Kehrwert der zeitlichen Abstände ZA1 bis ZAn korreliert mit der Abklingkurve AK. Erfindungsgemäß wird diese Erkenntnis dazu verwendet, valide Ereignisse von Rauschsignalen zu unterscheiden.

Hierzu ermittelt die Auswerteeinheit 3 über alle Impulse P, die innerhalb eines Zeitintervalls ZT mit einer Dauer von 20 µs liegen, die zeitlichen Abstände ZA1 bis ZAn.

Hierzu weist die Auswerteeinheit 3 bzw. das FPGA 8 einen Zeitgeber 5 und einen als Ringspeicher organisierten FIFO-Speicher 6 auf, in den bei jedem Auftreten eines elektrischen Impulses P ein mittels eines Zeitgebers 5 erzeugter Zeitstempel gespeichert wird. Die Auswerteeinheit 3 kann die zeitlichen Abstände ZA1 bis ZAn durch Differenzbildung der FIFO-Einträge berechnen.

Die Auswerteeinheit 3 weist weiter einen Referenzverlaufsspeicher 7 auf, der dazu ausgebildet ist, einen Referenzverlauf zu speichern. Der gespeicherte Referenzverlauf ist charakteristisch für einen Typ von ionisierender Strahlung, hier Beta-Strahlung, die auf den Szintillator 4 trifft. Der zeitliche Referenzverlauf stellt einen typischen bzw. charakteristischen Verlauf zeitlicher Abstände zwischen Impulsen dar, wenn ein zu detektierendes Teilchen auf den Szintillator trifft.

Zur Detektion eines auf den Szintillator 4 treffenden Beta-Teilchens vergleicht die Auswerteeinheit 3 den Verlauf der ermittelten zeitlichen Abstände ZA1 bis ZAn mit dem gespeicherten Referenzverlauf. Stimmen der Verlauf der ermittelten zeitlichen Abstände mit einem gespeicherten Referenzverlauf in einem vorgegebenen Umfang überein, wird ein Beta-Teilchen registriert und beispielsweise eine Zählrate von Beta-Teilchen entsprechend erhöht. Andernfalls wird kein Beta-Teilchen registriert.

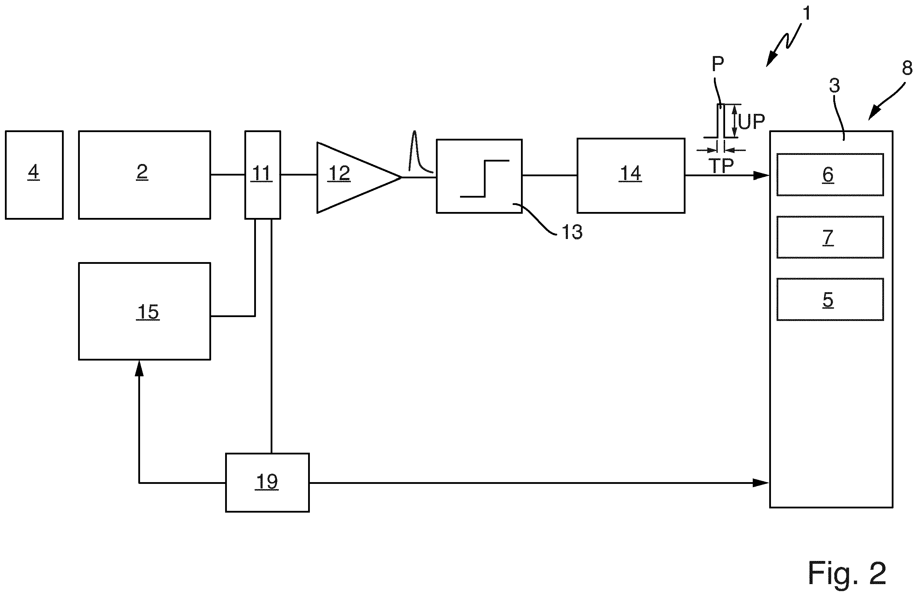

Fig. 2 zeigt ein erfindungsgemäßes Messsystem 1 in Form eines Kontaminationsmessgeräts gemäß einer weiteren Ausführungsform.

Bei der in Fig. 2 gezeigten Ausführungsform fehlt der in Fig. 1 dargestellte Alpha-Kanal, d.h. eine Messung der Alpha-Strahlung erfolgt ebenfalls durch Auswertung der zeitlichen Abstände zwischen den Impulsen P.

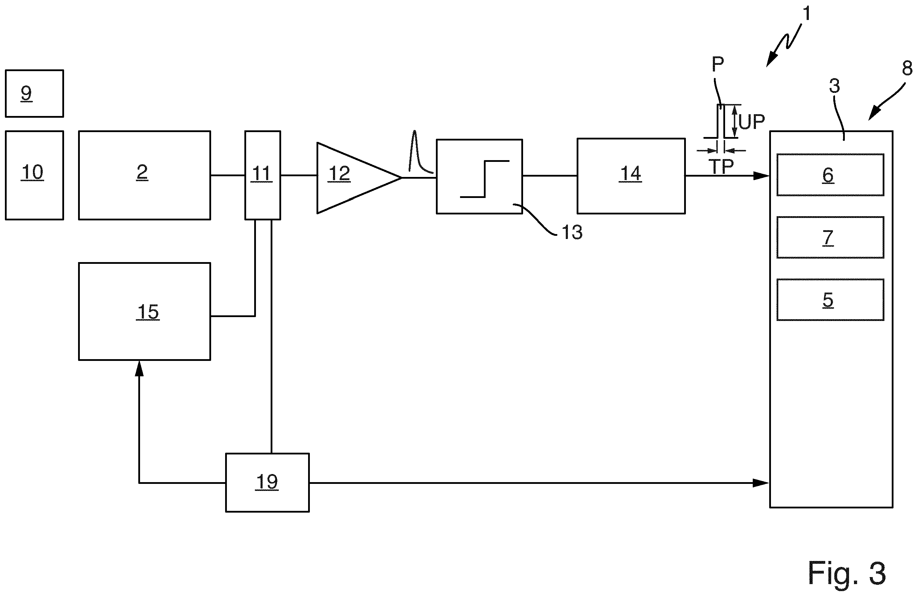

Fig. 3 zeigt ein nicht zur Erfindung gehörendes Messsystem 1 zur Messung von Chemo- und Biolumineszenz sowie Fluoreszenz.

Das Messsystem weist eine herkömmliche Blitzlichtquelle 9 auf, die dazu ausgebildet ist, eine Fluoreszenzprobe 10 derart anzuregen, dass diese die einzelnen Photonen emittiert. Hinsichtlich der grundsätzlichen Funktionen derartiger Messsysteme und deren Messgrößen sei auch auf die Offenbarung der EP 2 982 966 A1 verwiesen.

Zum Bestimmen der Messgröße wertet die Auswerteeinheit 3 ebenfalls einen zeitlichen Abstand zwischen aufeinanderfolgenden elektrischen Impulsen P aus.

## Patentansprüche

1. Messsystem (1), aufweisend:
- einen Szintillator (4), der dazu ausgebildet ist, ionisierende Strahlung, die auf den Szintillator trifft (4), in eine zeitliche Folge von Photonen umzuwandeln,
- einen optisch mit dem Szintillator (4) gekoppelten Photodetektor (2), der dazu ausgebildet ist, einzelne Photonen, die auf den Photodetektor (2) treffen, in zugehörige einzelne elektrische Impulse (P) umzuwandeln, und
- eine Auswerteeinheit (3),
**dadurch gekennzeichnet, dass**
- die Auswerteeinheit (3) dazu ausgebildet ist, einen zeitlichen Abstand (ZA1 bis ZAn) zwischen aufeinanderfolgenden elektrischen Impulsen (P) zum Bestimmen einer Messgröße auszuwerten,
- die Auswerteeinheit (3) dazu ausgebildet ist, für Impulse (P), die innerhalb eines vorgebbaren Zeitintervalls (ZT) liegen, die jeweiligen zeitlichen Abstände (ZA1 bis ZAn) zwischen aufeinanderfolgenden elektrischen Impulsen (P) zu ermitteln, und basierend auf dem ermittelten Verlauf der zeitlichen Abstände (ZA1 bis ZAn) die Messgröße zu bestimmen, und
- die Auswerteeinheit (3) dazu ausgebildet ist, den Verlauf der ermittelten zeitlichen Abstände (ZA1 bis ZAn) mit einem gespeicherten Referenzverlauf zeitlicher Abstände zu vergleichen, wobei der gespeicherte Referenzverlauf charakteristisch für einen Typ von ionisierender Strahlung ist, die auf den Szintillator (4) trifft.

2. Messsystem (1) nach Anspruch 1, **dadurch gekennzeichnet, dass**
- der gespeicherte Referenzverlauf charakteristisch für Betastrahlung ist.

3. Messsystem (1) nach einem der vorhergehenden Ansprüche, aufweisend
- einen Zeitgeber (5) und
- einen FIFO-Speicher (6), in den bei jedem Auftreten eines elektrischen Impulses (P) ein mittels des Zeitgebers (5) erzeugter Zeitstempel gespeichert wird.

4. Messsystem (1) nach einem der vorhergehenden Ansprüche, aufweisend
- einen Referenzverlaufsspeicher (7), der dazu ausgebildet ist, den Referenzverlauf zu speichern.

5. Messsystem (1) nach einem der vorhergehenden Ansprüche, **dadurch gekennzeichnet, dass**
- die Auswerteeinheit (3), und/oder der FIFO-Speicher (6), und/oder der Zeitgeber (5), und/oder der Referenzverlaufsspeicher (7) Bestandteile eines FPGA (8) sind.

6. Messsystem (1) nach einem der Ansprüche 2 bis 5, **dadurch gekennzeichnet, dass**
- der Szintillator (4) eine Abklingzeit größer als 100 ns aufweist.

7. Messsystem (1) nach einem der vorhergehenden Ansprüche, **dadurch gekennzeichnet, dass**
- die elektrischen Impulse (P) Impulse mit einer jeweils identischen Impulsspannung (UP) und einer jeweils identischen Impulsdauer (TP) sind.

8. Messsystem (1) nach einem der vorhergehenden Ansprüche, **dadurch gekennzeichnet, dass**
- der Photodetektor (2) ein Photomultiplier ist, der als Singlephotoncounter betrieben wird.

9. Messsystem (1) nach einem der vorhergehenden Ansprüche, **dadurch gekennzeichnet, dass**
- das Messsystem (1) ein Kontaminationsmessgerät für Alpha-Strahlung, und/oder Beta-Strahlung und/oder Gamma-Strahlung zur Bestimmung einer Aktivität, und/oder einer Kontamination, und/oder einer Aktivitätskonzentration, und/oder einer Ortsdosisleistung ist.

## Claims

1. Measurement system (1) having:
- a scintillator (4), which is configured to convert ionizing radiation that is incident on the scintillator (4) into a temporal succession of photons,
- a photodetector (2), which is optically coupled to the scintillator (4) and is configured to convert individual photons that are incident on the photodetector (2) into associated individual electrical pulses (P), and
- an evaluation unit (3),
**characterized in that**
- the evaluation unit (3) is configured to evaluate a temporal distance (ZA1 to ZAn) between consecutive electrical pulses (P) for determining a measurement variable,
- the evaluation unit (3) is configured to ascertain the respective temporal distances (ZA1 to ZAn) between consecutive electrical pulses (P) for pulses (P) which lie within a specifiable time interval (ZT) and to determine the measurement variable based on the ascertained profile of the temporal distances (ZA1 to ZAn), and
- the evaluation unit (3) is configured to compare the profile of the ascertained temporal distances (ZA1 to ZAn) with a stored reference profile of temporal distances, wherein the stored reference profile is characteristic of a type of ionizing radiation that is incident on the scintillator (4).

2. Measurement system (1) according to Claim 1, **characterized in that**
- the stored reference profile is characteristic of beta radiation.

3. Measurement system (1) according to either of the preceding claims, having
- a timer (5) and
- a FIFO memory (6) in which a timestamp generated by way of the timer (5) is stored with each occurrence of an electrical pulse (P).

4. Measurement system (1) according to any of the preceding claims, having
- a reference profile memory (7), which is configured to store the reference profile.

5. Measurement system (1) according to any of the preceding claims, **characterized in that**
- the evaluation unit (3) and/or the FIFO memory (6) and/or the timer (5) and/or the reference profile memory (7) are constituent parts of an FPGA (8).

6. Measurement system (1) according to any of Claims 2 to 5, **characterized in that**
- the scintillator (4) has a decay time of greater than 100 ns.

7. Measurement system (1) according to any of the preceding claims, **characterized in that**
- the electrical pulses (P) are pulses having a respective identical pulse voltage (UP) and a respective identical pulse duration (TP).

8. Measurement system (1) according to any of the preceding claims, **characterized in that**
- the photodetector (2) is a photomultiplier operated as a single-photon counter.

9. Measurement system (1) according to any of the preceding claims, **characterized in that**
- the measurement system (1) is a contamination measurement device for alpha radiation and/or beta radiation and/or gamma radiation for determining an activity and/or a contamination and/or an activity concentration and/or a local dose rate.

## Revendications

1. Système de mesure (1), comportant :
- un scintillateur (4) qui est conçu pour convertir un rayonnement ionisant, incident au scintillateur (4), en une séquence temporelle de photons,
- un photodétecteur (2) qui est couplé optiquement au scintillateur (4) et qui est conçu pour convertir des photons individuels, incidents au photodétecteur (2), en impulsions électriques individuelles associées (P), et
- une unité d'évaluation (3),
**caractérisé en ce que**
- l'unité d'évaluation (3) est conçue pour évaluer un intervalle de temps (ZA1 à ZAn) entre des impulsions électriques successives (P) afin de déterminer une grandeur de mesure,
- l'unité d'évaluation (3) étant conçue pour déterminer les intervalles de temps respectifs (ZA1 à ZAn ) entre des impulsions électriques successives (P) pour des impulsions (P) qui se situent dans un intervalle de temps spécifiable (ZT) et pour déterminer la grandeur de mesure sur la base de la courbe déterminée des intervalles de temps (ZA1 à ZAn), et
- l'unité d'évaluation (3) étant conçue pour comparer la courbe des intervalles de temps déterminés (ZA1 à ZAn) à une courbe des intervalles de temps de référence en mémoire, la courbe de référence en mémoire étant caractéristique d'un type de rayonnement ionisant qui est incident au scintillateur (4).

2. Système de mesure (1) selon la revendication 1, **caractérisé en ce que**
- la courbe de référence en mémoire est caractéristique du rayonnement bêta.

3. Système de mesure (1) selon l'une des revendications précédentes, comportant
- une horloge (5) et
- une mémoire FIFO (6) dans laquelle un horodatage généré par l'horloge (5) est mémorisé à chaque fois qu'une impulsion électrique (P) se produit.

4. Système de mesure (1) selon l'une des revendications précédentes, comportant
- une mémoire de courbe de référence (7) qui est conçue pour mémoriser la courbe de référence.

5. Système de mesure (1) selon l'une des revendications précédentes, **caractérisé en ce que**
- l'unité d'évaluation (3) et/ou la mémoire FIFO (6) et/ou l'horloge (5) et/ou la mémoire de courbe de référence (7) sont des composants d'un FPGA (8).

6. Système de mesure (1) selon l'une des revendications 2 à 5, **caractérisé en ce que** le scintillateur (4) a un temps de décroissance supérieur à 100 ns.

7. Système de mesure (1) selon l'une des revendications précédentes, **caractérisé en ce que**
- les impulsions électriques (P) sont des impulsions ayant une tension d'impulsion (UP) et une durée d'impulsion (TP) identiques.

8. Système de mesure (1) selon l'une des revendications précédentes, **caractérisé en ce que**
- le photodétecteur (2) est un photomultiplicateur qui fonctionne comme un compteur de photons uniques.

9. Système de mesure (1) selon l'une des revendications précédentes, **caractérisé en ce que**
- le système de mesure (1) est un dispositif de mesure de contamination destiné à un rayonnement alpha et/ou un rayonnement bêta et/ou un rayonnement gamma afin de déterminer une activité et/ou une contamination et/ou une concentration d'activité et/ou une intensité de dose locale.
